**Europäisches Patentamt**

**European Patent Office**

**Office européen des brevets**

(19)

(11) Veröffentlichungsnummer : **0 136 580**
**B1**

(12) **EUROPÄISCHE PATENTSCHRIFT**

(45) Veröffentlichungstag der Patentschrift :
22.02.89

(51) Int. Cl.⁴ : **F 16 D 35/00, F 01 P 7/04**

(21) Anmeldenummer : **84110552.1**

(22) Anmeldetag : **05.09.84**

(54) **Flüssigkeitsreibungskupplung.**

(30) Priorität : **06.10.83 DE 3336380**

(43) Veröffentlichungstag der Anmeldung :
**10.04.85 Patentblatt 85/15**

(45) Bekanntmachung des Hinweises auf die Patenterteilung : **22.02.89 Patentblatt 89/08**

(84) Benannte Vertragsstaaten :
**DE FR GB IT SE**

(56) Entgegenhaltungen :
**DE–A– 2 130 568**
**DE–A– 2 623 570**
**DE–A– 2 637 694**
**DE–A– 3 009 665**
**DE–B– 1 137 271**
**FR–A– 2 379 727**
**US–A– 3 262 528**
**US–A– 4 238 015**

(73) Patentinhaber : **Süddeutsche Kühlerfabrik Julius Fr. Behr GmbH & Co. KG**
**Mauserstrasse 3**
**D-7000 Stuttgart 30 (DE)**

(72) Erfinder : **Hauser, Kurt, Dipl.-Ing.**
**Zavelsteinstrasse 46**
**D-7000 Stuttgart 30 (DE)**

(74) Vertreter : **Heumann, Christian et al**
**Süddeutsche Kühlerfabrik Julius Fr. Behr GmbH & Co. KG Patentabteilung Mauserstrasse 3 Postfach 30 09 20**
**D-7000 Stuttgart 30 (DE)**

**Beschreibung**

Die Erfindung betrifft eine Flüssigkeitsreibungskupplung gemäß dem Oberbegriff des Anspruches 1 ; eine derartige Flüssigkeitsreibungskupplung wurde beispielsweise durch die DE-A-30 09 665 der Anmelderin bekannt.

Derartige Kupplungen übertragen ein Drehmoment aufgrund der Flüssigkeitsreibung eines viskosen Mediums, das sich in den Arbeitsspalten der Kupplung befindet. Diese Arbeitsspalte zwischen Antriebsscheibe und Kupplungsgehäuse befinden sich sowohl auf der vorderen wie auf der hinteren Seite der Antriebsscheibe, wobei sich die Ventilöffnung für die Zufuhr des viskosen Mediums auf der vorderen Seite der Antriebsscheibe befindet. Insofern sind die Bedingungen für eine Zufuhr des viskosen Mediums zu dem vorderen und hinteren Arbeitsspalt unterschiedlich, was vielfach zur Folge hat, daß der hintere Arbeitsspalt unzureichend oder unkontrolliert mit viskosem Medium gefüllt wird. Dies führt zu unerwünschten Drehmoment- bzw. Drehzahlschwankungen, d. h. das Regelverhalten einer solchen Kupplung ist unbefriedigend, weil sich keine definierte Zuordnung bzw. Abhängigkeit zwischen Abtriebsdrehzahl der Kupplung und der Temperatur als Regelgröße ergibt.

Bei der bekannten Kupplung der DE-A-30 09 665 der Anmelderin sind in der Antriebsscheibe mehrere auf dem Umfang im Bereich der Arbeitsspalte angeordnete, radial verlaufende Langlöcher vorgesehen, die einen Durchtritt des viskosen Mediums von der vorderen zur hinteren Seite der Antriebsscheibe ermöglichen sollen. Bei anderen Kupplungsbauarten, z. B. nach der DE-B-11 37 271 sind Durchtrittsbohrungen in der Antriebsscheibe radial innerhalb der Arbeitsspalte vorgesehen. Bei einer weiteren Bauart nach der DE-A-26 37 694 sind zur Verbesserung der Zirkulation des viskosen Mediums sogenannte Pumpnuten vorgesehen, damit auch der hintere Arbeitsspalt besser gefüllt wird. Pumpelemente in Form von neben einer Durchtrittsbohrung angeordnetem Staukörper sind ferner nach ·der US-A-3 262 528 bekannt. Schließlich wurde zu diesem Problemkreis noch eine Lösung nach der DE-A-26 23 570 bekannt, bei der neben der eigentlichen Ventilöffnung in der Trennwand zusätzlich eine Überströmöffnung vorgesehen ist, durch die ständig viskoses Medium in die Arbeitskammer strömt. Alle vorgenannten Maßnahmen stellen keine befriedigende Lösung des aufgezeigten Problems dar.

Schließlich wurde durch die DE-A-21 30 568 eine Flüssigkeitsreibungskupplung mit Schöpfrohrfüllungsregelung bekannt, bei welcher das viskose Medium aus einer Regelkammer über eine Vielzahl von radial und tangential versetzten Bohrungen in einer Zwischenwand in die Arbeitskammer gelangt. Die Primärscheibe dieser Kupplung weist ebenfalls eine Vielzahl von radial und tangential versetzten Querbohrungen auf, damit das viskose Medium von der Vorder — auch auf die Rückseite der Primärscheibe gelangt. Die Füllung und Entleerung der Arbeitskammer erfolgt durch eine reine Querströmung stets über dieselben Bohrungen, da Arbeitskammer und Regelkammer wie kommunizierende Gefäße wirken ; es findet somit keine Zirkulation über eine Zulauf- und eine Rücklauföffnung statt, woraus sich andere Zu- und Abströmbedingungen ergeben.

Es ist daher Aufgabe der Erfindung, bei einer Flüssigkeitsreibungskupplung der eingangs erwähnten Art die Zuströmbedingungen des viskosen Mediums zum hinteren Arbeitsspalt und auch die Abströmbedingungen aus dem hinteren Arbeitsspalt zu verbessern, um somit das Regelverhalten der Kupplung im Hinblick auf stabile Zwischendrehzahlen zu verbessern. Die Lösung dieser Aufgabe besteht in den kennzeichnenden Merkmalen des Anspruches 1, wobei sich vorteilhafte Weiterbildungen der Erfindung aus den Unteransprüchen 2 bis 6 ergeben.

Gemäß Anspruch 1 ist in der Antriebsscheibe eine Überströmöffnung in Verbindung mit einem Staukörper und einer Ringnut vorgesehen : Dadurch ergibt sich eine kontrollierte Zufuhr des viskosen Mediums vom vorderen zum hinteren Arbeitsspalt, der somit besser und gleichmäßiger gefüllt wird. Der Staukörper kann dabei ein beliebiges, an sich bekanntes Hindernis darstellen, das in Umfangsrichtung versetzt neben der Überströmöffnung an der Antriebsscheibe befestigt ist und somit eine Querströmung des viskosen Mediums auf die Rückseite der Antriebsscheibe bewirkt.

Ferner ist auf der Vorderseite der Antriebsscheibe im radialen Bereich der Überströmöffnung eine Ringnut vorgesehen, deren Querschnitt von dem Staukörper ausgefüllt wird : Hierdurch wird erreicht, daß sich das viskose Medium zunächst in der umlaufenden Ringnut sammeln kann, was für einen kontrollierten, gleichmäßigen Zufluß des viskosen Mediums von Vorteil ist.

Nach einer vorteilhaften Weiterbildung der Erfindung gemäß Anspruch 2 ist auf der Rückseite der Antriebsscheibe eine weitere Ringnut vorgesehen, die über die Überströmöffnung mit der Ringnut auf der Vorderseite bzw. mit dem vorderen Arbeitsspalt in Verbindung steht : Hierdurch wird gewährleistet, daß das aus der Überströmöffnung austretende viskose Medium sich zunächst in der rückwärtigen Ringnut sammeln kann, bevor es in den hinteren Arbeitsspalt eintritt. Auch diese Maßnahme verbessert die Zuströmbedingungen zum hinteren Arbeitsspalt und somit das Regelverhalten der Kupplung.

Nach einer vorteilhaften Weiterbildung der Erfindung gemäß Anspruch 3 ist für die Ringnuten ein Rechteckquerschnitt vorgesehen : . Dies ist insbesondere für die vordere Ringnut in Verbindung mit einem zylindrischen Staukörper vorteilhaft.

Nach einer weiteren vorteilhaften Ausbildung der Erfindung gemäß Anspruch 4 ist der Querschnitt der hinteren Ringnut in der Weise trapezförmig ausgebildet, daß die äußere Wandung sich in Richtung auf den hinteren Arbeitsspalt konisch erweitert : Durch diese Maßnahme wird erreicht, daß das viskose Medium, das sich in der hinteren Ringnut gesammelt hat, gleichmäßiger und verlustfreier in den hinteren Arbeitsspalt eintreten kann.

Nach einer weiteren vorteilhaften Ausbildung der Erfindung gemäß Anspruch 5 ist im radial äußeren Bereich der Antriebsscheibe eine weitere Überströmöffnung in Verbindung mit einem weiteren Staukörper auf der Rückseite der Antriebsscheibe vorgesehen : Dadurch werden die Abströmbedingungen des viskosen Mediums aus dem hinteren Arbeitsspalt verbessert. Das viskose Medium wird somit in gleicher Weise, wie es im radial innenliegenden Bereich in den hinteren Arbeitsspalt hineingefördert wird, im radial außenliegenden Bereich wieder aus dem Arbeitsspalt herausgepumpt und zwar direkt in den Bereich der Rücklaufeinrichtung, die aus einem am Kupplungsgehäuse befestigten Staukörper und entsprechenden Rücklaufbohrungen besteht. Diese Maßnahme trägt somit auch zum verbesserten Regelverhalten der Kupplung bei.

Analog Anspruch 1 ist in vorteilhafter Weiterbildung der Erfindung gemäß Anspruch 6 eine weitere Ringnut auf der Rückseite der Antriebsscheibe im Bereich des äußeren Staukörpers vorgesehen, so daß sich das viskose Medium besser sammeln und wirkungsvoller abgepumpt werden kann.

Ein Ausführungsbeispiel der Erfindung ist in der Zeichnung dargestellt und wird im folgenden näher beschrieben. Es zeigen

Figur 1 einen (halben) Axialschnitt der Flüssigkeitsreibungskupplung gemäß der Schnittlinie I-I

Figur 2 einen Teil-Axialschnitt durch den inneren Staukörper gemäß der Schnittlinie II-II

Figur 3 einen Teil-Schnitt gemäß der Umfangsschnittlinie III-III, in die Ebene abgewickelt

Figur 4 einen Teil-Radialschnitt (Viertelkreisausschnitt) mit Ansicht in Richtung X und

Figur 5 einen Teil-Radialschnitt (Viertelkreisausschnitt) mit Ansicht in Richtung Y.

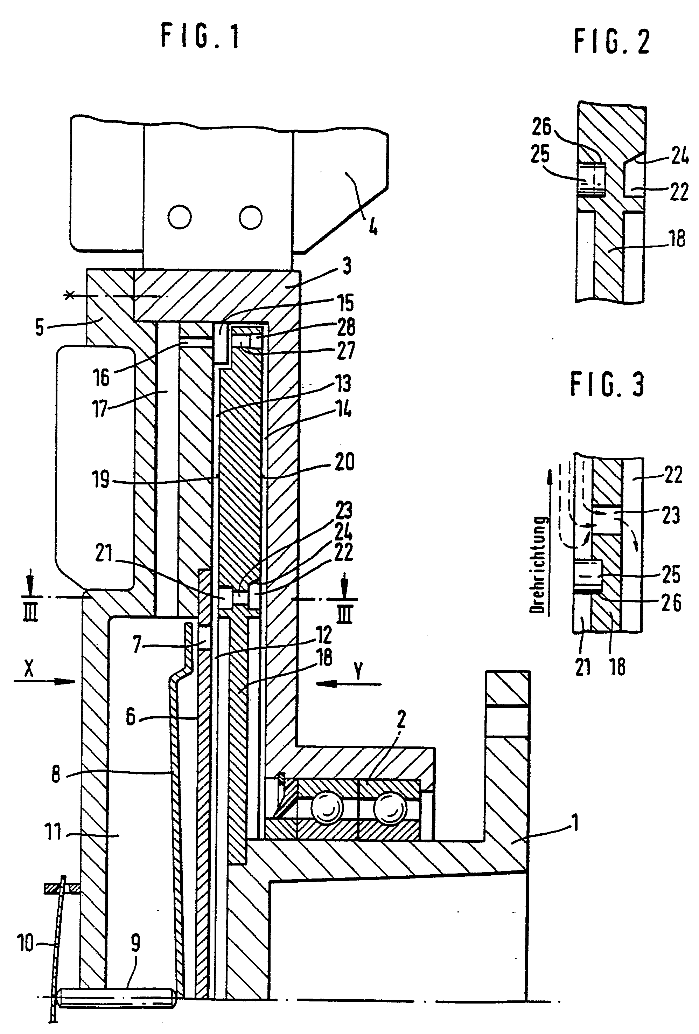

Figur 1 zeigt eine in ihrem grundsätzlichen Aufbau bekannte Flüssigkeitsreibungskupplung, wie sie insbesondere für den Antrieb eines Lüfters Verwendung findet, der einen Kühlluftstrom durch den Kühler für eine Brennkraftmaschine in einem Kraftfahrzeug fördert. Eine solche Kupplung wird über das Antriebsteil 1 entweder direkt oder indirekt über die Brennkraftmaschine angetrieben und trägt auf seinem Kupplungsgehäuse 3, das drehbar über das Lager 2 gegenüber dem Antriebsteil 1 gelagert ist, einen Lüfter 4, der in nicht näher dargestellter Weise als Axial-Lüfter ausgebildet ist. Das Kupplungsgehäuse 3 wird frontseitig durch einen Deckel 5 abgeschlossen und durch eine innenliegende Trennwand 6 in eine Vorratskammer 11 und eine Arbeitskammer 12 unterteilt, wobei sich in der Trennwand 6 eine Ventilöffnung 7 befindet, die über einen Ventilhebel 8 verschlossen bzw. freigegeben werden kann. Die Steuerung des Ventils 7, 8 erfolgt temperaturabhängig, d. h. über ein auf der Frontseite angeordnetes Bi-Metall 10, dessen temperaturabhängige Wölbung über den Schaltstift 9 auf den Ventilhebel 8 übertragen wird, der in nicht näher dargestellter Weise an der Trennwand 6 befestigt ist. Neben der Ventilöffnung 7 ist die Arbeitskammer 12 auch über eine Rücklaufeinrichtung mit der Vorratskammer 11 verbunden : In ansich bekannter Weise ist am Kupplungsgehäuse 3 ein Staukörper 15 im Bereich einer axialen Rücklaufbohrung 16 angeordnet, die über die radiale Rücklaufbohrung 17 mit der Vorratskammer 11 in Verbindung steht. In der Arbeitskammer 12 läuft die Antriebsscheibe 18 um, die drehfest mit dem Antriebsteil 1 verbunden ist und mit dem Kupplungsgehäuse 3 einen vorderen Arbeitsspalt 13 und einen hinteren Arbeitsspalt 14 bildet — dabei ist die vordere Arbeitsfläche 19 und die hintere Arbeitsfläche 20 der Antriebsscheibe 18 planparallel ausgebildet, ebenso die gegenüberliegenden Arbeitsflächen des Kupplungsgehäuses 3. Im radial innenliegenden Bereich der beiden Arbeitsspalte 13 und 14, d. h. in ihrem Eintrittsbereich, ist in der Antriebsscheibe 18, parallel zur Kupplungsdrehachse, eine Überströmöffnung 23 als Querbohrung angebracht. In die Vorderseite 19 der Antriebsscheibe 18 ist eine umlaufende Kreisringnut 21 eingearbeitet, die den gleichen Radius gegenüber der Kupplungsdrehachse aufweist wie die Querbohrung 23. In die Rückseite 20 der Antriebsscheibe 18 ist in ähnlicher Weise eine weitere Kreisringnut 22 eingearbeitet, die ebenfalls einen Radius aufweist, der dem der Querbohrung 23 in Bezug auf die Kupplungsdrehachse entspricht. Somit stehen beide Ringnuten 21 und 22 über die Querbohrung 23 in Strömungsverbindung.

Wie insbesondere aus den Figuren 2, 3 und 4 zu ersehen ist, ist, in Umfangsrichtung gegenüber der Querbohrung 23 versetzt, in der Ringnut 21 ein zylindrischer Staukörper 25 angeordnet, der den rechteckförmigen Querschnitt der Ringnut 21 vollständig ausfüllt. Der zylindrisch ausgebildete Staukörper 25 ist in eine entsprechende Aufnahmebohrung 26 fest in die Antriebsscheibe 18 eingepreßt und schließt bündig mit der vorderen Arbeitsfläche 19 der Antriebsscheibe 18 ab.

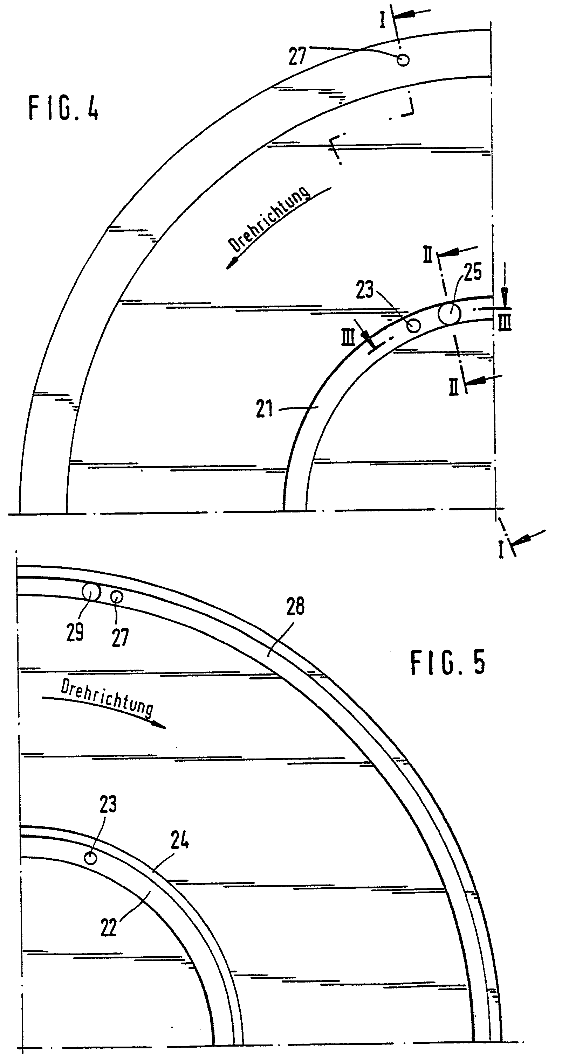

Figur 5 zeigt schließlich den weiteren Staukörper 29, der — in analoger Weise wie der Staukörper 25 in der Ringnut 21 — in der radial außen angeordneten Kreisringnut 28 auf der hinteren Arbeitsfläche 20 der Antriebsscheibe 18 angeordnet ist. In Umfangsrichtung versetzt gegenüber dem Staukörper 29 ist eine weitere Überströmöffnung 27 als Querbohrung vorgesehen, die etwa auf dem gleichen Radius gegenüber der Kupplungsdrehachse wie der Staukörper 15 bzw. die axiale Rücklaufbohrung 16 angeordnet ist.

Die Arbeitsweise dieser Flüssigkeitsreibungskupplung ist die folgende : Infolge temperaturbedingter Wölbung des Bi-Metalles 10 wird die Stellung des Ventilhebels 8 über den Schaltstift 9 gesteuert. Bei freigegebener Ventilöffnung 7 strömt viskoses Medium aus der Vorratskammer 11 unter Fliehkrafteinfluß infolge des rotierenden Kupplungsgehäuses 3 in die Arbeitskammer 12, d. h. zunächst in den vorderen Arbeitsspalt 13, wobei ein Teilstrom abgezweigt und in der Ringnut 21 gesammelt wird. Infolge der mit Antriebsdrehzahl umlaufenden Antriebsscheibe 18 wird durch den Staukörper 25 im Bereich der Querbohrung 23 das viskose Medium gestaut und — wie insbesondere Figur 3 zeigt — unter dem Einfluß dieses Staudruckes durch die Querbohrung 23 auf die Rückseite der Antriebsscheibe 18 gedrückt, wo sich das viskose Medium zunächst in der rückwärtigen Ringnut 22 sammelt. Von dort aus gelangt es über die Schräge 24 relativ leicht und gleichmäßig auf den Umfang verteilt in den hinteren Arbeitsspalt 14. Zur Verbesserung der Zuströmbedingungen des viskosen Mediums in den hinteren Arbeitsspalt 14 können auch mehrere Querbohrungen 23 auf dem Umfang angeordnet sein, natürlich in Verbindung mit entsprechenden Staukörpern 25. Nachdem das viskose Medium, gleichmäßig auf den Umfang verteilt, in den vorderen Arbeitsspalt 13 und den hinteren Arbeitsspalt 14 eingetreten ist, strömt es unter dem Einfluß der Fliehkraft radial nach außen und wird im Bereich des vorderen Arbeitsspaltes 13 durch die ansich bekannte Rücklaufeinrichtung 15, 16, 17 wieder in die Vorratskammer 11 zurückgefördert. Das im rückwärtigen Arbeitsspalt 14 radial nach außen strömende viskose Medium gelangt in die radial außen liegende Ringnut 28, wo es sich sammeln kann, um dann infolge der Wirkung des Staukörpers 29 durch die Querbohrung 27 auf die Vorderseite der Antriebsscheibe 18 in den Bereich des Staukörpers 15 gedrückt zu werden. Dort vereinigen sich somit beide Flüssigkeitsströme aus dem vorderen und hinteren Arbeitsspalt 13 bzw. 14 und werden gemeinsam in die Vorratskammer 11 zurückgepumpt.

Durch die Anordnung von zusätzlichen radial innen- und außenliegenden Pumporganen in der Antriebsscheibe ist es somit möglich geworden, die ungleichen Zu- und Abströmbedingungen für die Vorder- und Rückseite der Antriebsscheibe zu kompensieren und einen gleichmäßigen und gleichen Zu- und Abstrom des viskosen Mediums für beide Seiten der Antriebsscheibe zu gewährleisten.

**Patentansprüche**

1. Flüssigkeitsreibungskupplung mit einer auf einem Antriebsteil befestigten Antriebsscheibe und einem gegenüber dem Antriebsteil drehbar gelagerten Gehäuse, das durch eine Trennwand in eine Arbeits- und eine Vorratskammer abgeteilt ist, die einerseits über ein temperaturabhängig gesteuertes Ventil und andererseits über eine Rücklaufeinrichtung zur Steuerung der Zirkulation eines viskosen Mediums miteinander in Verbindung stehen, wobei in der Arbeitskammer die Antriebsscheibe umläuft und mit dem Gehäuse vordere und hintere Arbeitsspalte bildet, die zur Übertragung eines Drehmomentes mit dem viskosen Medium vollständig oder teilweise gefüllt sind, daß im radial innen liegenden Bereich der Arbeitsspalte in der Antriebsscheibe mindestens eine Überströmöffnung angeordnet ist, dadurch gekennzeichnet, daß im Bereich der Überströmöffnung (23) ein an der Vorderseite (19) der Antriebsscheibe (18) befestigter Staukörper (25) angeordnet ist und daß im radialen Bereich der Überströmöffnung (23) auf der Vorderseite (19) der Antriebsscheibe (18) eine Ringnut (21) koaxial angeordnet, der Querschnitt der Ringnut (21) durch den Staukörper (25) ausgefüllt und der Staukörper gegenüber der Überströmöffnung (23) in Umfangsrichtung versetzt angeordnet ist.

2. Flüssigkeitsreibungskupplung nach Anspruch 1, dadurch gekennzeichnet, daß im radialen Bereich der Überströmöffnung (23) auf der Rückseite (20) der Antriebsscheibe (18) eine weitere Ringnut (22) koaxial angeordnet ist.

3. Flüssigkeitsreibungskupplung nach Anspruch 1 oder 2, dadurch gekennzeichnet, daß der Querschnitt der Ringnuten (21, 22) rechteckförmig ist.

4. Flüssigkeitsreibungskupplung nach Anspruch 2 oder 3, dadurch gekennzeichnet, daß die radial außen liegende Wandung (24) der auf der Rückseite (20) der Antriebsscheibe (18) angeordneten Ringnut (22) in axialer Richtung auf den hinteren Arbeitsspalt (14) zu im Durchmesser zunimmt.

5. Flüssigkeitsreibungskupplung nach dem Oberbegriff des Anspruches 1 oder einem der Ansprüche 1-4, dadurch gekennzeichnet, daß im radial außen liegenden Bereich der Arbeitsspalte (13, 14) in der Antriebsscheibe (18) mindestens eine weitere Überströmöffnung (27) und in deren Bereich auf der Rückseite (20) der Antriebsscheibe (18) ein weiterer Staukörper (29) angeordnet und daß der Austritt der Überströmöffnung (27) auf der Seite des vorderen Arbeitsspaltes (13) im radialen Bereich der Rücklaufeinrichtung (15, 16) angeordnet ist.

6. Flüssigkeitsreibungskupplung nach Anspruch 5, dadurch gekennzeichnet, daß im radialen Bereich der weiteren Überströmöffnung (27) auf der Rückseite (20) der Antriebsscheibe (18) eine Ringnut (28) koaxial angeordnet und daß deren Querschnitt durch den Staukörper (29) aufgefüllt ist, wobei der Staukörper (29) in Umfangsrichtung versetzt zur Überströmöffnung (27) angeordnet ist.

**Claims**

1. A fluid friction coupling comprising a drive disc which is fixed on a drive portion and a housing which is mounted rotatably relative to the drive portion and which is divided by a separating wall into a working chamber and a supply chamber which communicate with each other on the one hand by way of a valve which is controlled in dependence on temperature and on the other hand by way of a return means for controlling the circulation of a viscous medium, wherein the drive disc rotates in the working chamber and with the housing forms front and rear working gaps which, for the transmission of a torque, are completely or partially filled with the viscous medium, while at least one flow transfer opening is arranged in the radially inward region of the working gaps in the drive disc, characterised in that a ram body (25) which is fixed to the front side (19) of the drive disc (18) is arranged in the region of the flow transfer opening (23) and that an annular groove (21) is coaxially arranged in the radial region of the flow transfer opening (23) on the front side (19) of the drive disc (28), the cross-section of the annular groove (21) is filled by the ram body (25) and the ram body is arranged in circumferentially displaced relationship to the flow transfer opening (23).

2. A fluid friction coupling according to claim 1 characterised in that a further annular groove (22) is coaxially arranged in the radial region of the flow transfer opening (23) on the rear side (20) of the drive disc (18).

3. A fluid friction coupling according to claim 1 or claim 2 characterised in that the cross-section of the annular grooves (21, 22) is rectangular.

4. A fluid friction coupling according to claim 2 or claim 3 characterised in that the radially outwardly disposed wall (24) of the annular groove (22) which is arranged on the rear side (20) of the drive disc (18) increases in diameter in the axial direction towards the rear working gap (14).

5. A fluid friction coupling according to the classifying portion of claim 1 or one of claims 1 to 4 characterised in that at least one further flow transfer opening (27) is arranged in the radially outward region of the working gaps (13, 14) in the drive disc (18) and a further ram body (29) is arranged in the region of the further flow transfer opening (27) on the rear side (20) of the drive disc (18), and that the exit of the flow transfer opening (27) is arranged on the side of the front working gfap (13) in the radial region of the return means (15, 16).

6. A fluid friction coupling according to claim 5 characterised in that an annular groove (28) is coaxially arranged in the radial region of the further flow transfer opening (27) on the rear side (20) of the drive disc (18) and that the cross-section of the annular groove (28) is filled by the ram body (25), wherein the ram body (29) is arranged in circumferentially displaced relationship to the flow transfer opening (27).

**Revendications**

1. Embrayage à frottement visqueux comportant un disque d'entraînement fixé sur une partie d'entraînement et un carter monté rotatif par rapport à la partie d'entraînement et subdivisé, par une paroi de séparation, en une chambre de travail et une chambre de réserve, qui sont reliées entre elles d'une part par l'intermédiaire d'une soupape commandée en fonction de la température et d'autre part par l'intermédiaire d'un dispositif de retour pour la commande de la circulation d'un milieu visqueux, et dans lequel le disque d'entraînement tourne à l'intérieur de la chambre de travail et forme, avec le carter, des fentes de travail avant et arrière, qui sont remplies totalement ou partiellement par le milieu visqueux pour la transmission d'un couple, alors qu'au moins une ouverture de trop-plein est ménagée dans le disque d'entraînement dans la zone intérieure, du point de vue radial, des fentes de travail, caractérisé en ce qu'un corps de refoulement (25) fixé à la face avant (19) du disque d'entraînement (18), est disposé au voisinage de la zone de trop-plein (23), et qu'une gorge annulaire (21) est ménagée coaxialement, dans la zone radiale par rapport à l'ouverture de trop-plein (23), dans la face avant (19) du disque d'entraînement (18), que la section transversale de la gorge annulaire (21) est remplie par le corps de refoulement (25) et que ce dernier est disposé en étant décalé dans la direction circonférentielle par rapport à l'ouverture de trop-plein (23).

2. Embrayage à frottement visqueux selon la revendication 1, caractérisé en ce qu'une autre gorge annulaire (22) est ménagée coaxialement, dans la zone radiale par rapport à l'ouverture de trop-plein (23), dans la face arrière (20) du disque d'entraînement (18).

3. Embrayage à frottement visqueux selon la revendication 1 ou 2, caractérisé en ce que la section transversale des gorges annulaires (21, 22) possède une forme rectangulaire.

4. Embrayage à frottement visqueux selon la revendication 2 ou 3, caractérisé en ce que le diamètre de la paroi (24), extérieure du point de vue radial, de la gorge annulaire (22) ménagée dans la face arrière (20) du disque d'entraînement (18) augmente dans la direction axiale, en direction de la fente arrière de travail (14).

5. Embrayage à frottement visqueux selon le préambule de la revendication 1 ou selon l'une des revendications 1-4, caractérisé en ce qu'au moins une autre ouverture de trop-plein (27) est ménagée dans le disque d'entraînement (18) dans la zone extérieure, du point de vue radial, de la fente de travail (13, 14), et qu'un autre corps de refoulement (29) est disposé, au voisinage de cette ouverture de trop-plein, sur la face arrière (20) du disque d'entraînement (18), et que la sortie de l'ouverture de trop-plein (27) du côté de la fente de travail avant (13) est située dans la partie radiale du dispositif de retour (15, 16).

6. Embrayage à frottement visqueux selon la revendication 5, caractérisé en ce qu'une gorge annulaire (28) est ménagée coaxialement dans la face arrière (20) du disque d'entraînement (18), dans la zone radiale par rapport à l'autre ouverture de trop-plein (27), et que sa section transversale est remplie par le corps de refoulement (29), ce dernier étant décalé dans la direction circonférentielle par rapport à l'ouverture de trop-plein (27).

FIG. 1

FIG. 2

FIG. 3

Drehrichtung

FIG. 4

27

Drehrichtung

I

23
25
II
III
III
II
21

Drehrichtung

29  27
28

FIG. 5

23
24
22